(19) Europäisches Patentamt
European Patent Office
Office européen des brevets

(11) **EP 2 423 582 B1**

(12) **EUROPEAN PATENT SPECIFICATION**

(45) Date of publication and mention
of the grant of the patent:
**20.01.2016 Bulletin 2016/03**

(21) Application number: **10151523.7**

(22) Date of filing: **25.01.2010**

(51) Int Cl.:
*F22B 35/00* (2006.01)    *F22B 37/10* (2006.01)
*F23J 3/00* (2006.01)    *F23L 15/04* (2006.01)
*F23N 5/24* (2006.01)    *F28F 27/00* (2006.01)
*F28G 15/00* (2006.01)    *G01M 3/22* (2006.01)

(54) **Heat transfer tube monitoring apparatus**

Wärmeübertragungsrohrüberwachungsvorrichtung

Appareil de surveillance des tuyaux de transfert de chaleur

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **28.04.2009 JP 2009108834**

(43) Date of publication of application:
**29.02.2012 Bulletin 2012/09**

(73) Proprietor: **Mitsubishi Hitachi Power Systems, Ltd.**
**Yokohama 220-8401 (JP)**

(72) Inventors:
• **Kagawa, Seiji**
**HIROSHIMA Hiroshima-ken 733-8553 (JP)**
• **Murakami, Moritoshi**
**MIHARA Hiroshima-ken 729-0393 (JP)**
• **Miyaji, Tsuyoshi**
**HIROSHIMA Hiroshima-ken 733-8553 (JP)**
• **Okamoto, Takuya**
**MIHARA Hiroshima-ken 729-0393 (JP)**
• **Kamiyama, Naoyuki**
**HIROSHIMA Hiroshima-ken 733-8553 (JP)**

(74) Representative: **Bongiovanni, Simone et al**
**Studio Torta S.p.A.**
**Via Viotti, 9**
**10121 Torino (IT)**

(56) References cited:
JP-A- H1 194 233    JP-A- H07 145 925
JP-A- 2001 336 705    US-A- 5 840 100

EP 2 423 582 B1

**Description**

Technical Field

The present invention relates to a heat transfer tube monitoring apparatus, for use in a heat exchanger such as a heat recovery apparatus, that monitors the state (e.g., scale formation, break) of a heat transfer tube bundle made of a fin tube or the like.

Background Art

Such a heat transfer tube monitoring apparatus is disclosed in document JP 1 114 613 A.

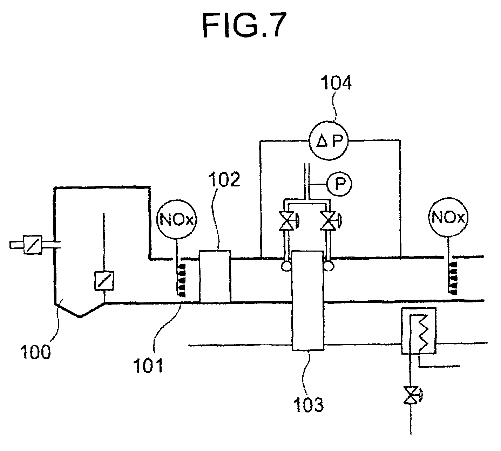

As illustrated in Fig. 7, at a thermal plant, the combustion gas generated by combusting fuel in a furnace 100 is made into flue gas by being heat exchanged for a required amount. The flue gas is discharged outside of the system through an air preheater (heat exchanger) 103 after nitrogen oxide contained in the flue gas is reduced with a denitrating apparatus 102 provided at a flue gas duct 101.

Meanwhile, air is brought from the atmosphere, is heated by heat exchanged with the flue gas in the air preheater 103, and is supplied to the furnace 100 as the air for use in combustion.

For example, Japanese Patent Application Laid-open No. H1-114613 discloses a pressure difference monitoring unit 104 that is used for detecting the pressure difference between the entrance and the exit of the air preheater 103 and displays the detected difference thereon. Accordingly, the AH pressure difference monitoring unit 103 manages the operation performed by the air preheater 103.

Deposition of dust in heat transfer tubes of a boiler in an exhaust heat recovery boiler (heat exchanger) provided in a steel furnace is automatically detected at an early stage without fail. Concentrated adherence of dust is prevented by preventing drain water from being sprayed to the boiler heat transfer tubes at a start of soot blower operation, thereby constantly maintaining draft strength in a furnace stack and the like. The soot blowers are started when a flue gas pressure drop $\Delta P$ (a pressure difference between the entrance and the exit) in the exhaust heat recovery boiler measured with a pressure difference meter becomes equal to or more than a set value, to surely prevent drop of heat transfer efficiency and exhaust heat recovery efficiency to the steel member. For such soot blower operation, for example, Japanese Patent Application Laid-open No. 10-274408 discloses a method that, at a start of soot blower operation, sprays steam of the soot blowers in a direction in which no steam is to be sprayed toward the boiler heat transfer tube for a certain period of time to purge water inside soot blower tubes and pipes and then sprays steam toward the boiler heat transfer tube.

In the methods disclosed in Japanese Patent Application Laid-open No. H1-114613 and Japanese Patent Application Laid-open No. 10-274408, the heat exchanger operation is controlled by detecting the pressure difference between the entrance and the exit of the heat exchanger. This arrangement causes a problem in that, when the heat exchanger is made by assembling a plurality of stages of heat transfer tube bundles, on which heat transfer tube bundle in the heat exchanger closure has occurred or dust has been deposited cannot be determined during the heat exchanger operation.

In addition, pressure difference detecting methods disclosed in Japanese Patent Application Laid-open No. H1-114613 and Japanese Patent Application Laid-open No. 10-274408 cannot distinguish the following two cases: dust has been deposited and adhered on a plurality of stages of heat transfer tube bundles, or on a specific heat transfer tube bundle. Therefore, steam or compressed air is sprayed in all the soot blowers evenly.

This configuration results in shortage of the spray amount of steam or compressed air of soot blowers for the specific heat transfer tube bundle in which a large amount of dust has been deposited. Accordingly, more dust will be deposited in this heat transfer tube bundle.

Closure of the heat transfer tube bundles happen when ash has been deposited or scale has formed thereon. Scale can form depending on its composition and the temperature of the heat transfer tube bundles, thereby making it hard to predict on which heat transfer tube bundle scale forms.

Citation List

Patent Literatures

PATENT LITERATURE 1 Japanese Patent Application Laid-open No. H1-114613
PATENT LITERATURE 2 Japanese Patent Application Laid-open No. 10-274408

Summary of Invention

Technical Problem

The present invention is made to solve the problems as described above. An object of the present invention is to provide a heat transfer tube monitoring apparatus that is used for detecting a pressure difference of each of the heat transfer tube bundles during the heat exchanger operation constituted by a plurality of states of heat transfer tube bundles. The heat transfer tube monitoring apparatus thus enables identification of the status of scale having formed in each of the heat transfer tube bundles.

When more steam or compressed air is sprayed to a specific heat transfer tube bundle than to the other heat transfer tube bundles, the specific bundle is highly likely to break down. Another object of the present invention is to specify an abnormal heat transfer tube bundle during the operation.

Solution to Problem

To achieve the above objects, the following means are proposed.

According to an aspect of the present invention, a heat transfer tube monitoring apparatus for use in a heat exchanger including multiple-stage heat transfer tube bundles spaced apart from each other in a flow direction of flue gas, the heat transfer tube monitoring apparatus includes a differential pressure detecting unit that is used for detecting a differential pressure between upstream and downstream for each of the heat transfer tube bundles.

Advantageously, the heat transfer tube monitoring apparatus further includes a heat-transfer medium detecting unit that is provided downstream of each of the heat transfer tube bundles and detects leakage of a heat-transfer medium flowing in the heat transfer tube bundles.

Advantageously, the heat transfer tube monitoring apparatus further includes a display that displays thereon the differential pressure for each of the heat transfer tube bundles detected by the differential pressure detecting unit and presence of leakage of the heat-transfer medium detected by the heat-transfer medium detecting unit.

Advantageous Effects of Invention

The present invention according to the claims described in Claims adopts the respective units described above. An abnormal heat transfer tube bundle can be specified by detecting the pressure difference between the upstream and the downstream for each of the heat transfer tube bundles by the differential pressure detecting unit.

When, for example, scale is removed by a soot blower, the heat-transfer medium detecting unit detects the leakage of the heat-transfer medium, thereby confirming whether abnormal conditions, such as breaking down, have occurred on the heat transfer tube bundles.

Brief Description of Drawings

Fig. 1 Fig. 1 is a view of a schematic configuration of a thermal plant applying a heat transfer tube monitoring apparatus according to an embodiment of the present invention.

Fig. 2 Fig. 2 is an enlarged plain view of a heat exchanger and a soot blowing apparatus shown in Fig. 1.

Fig. 3 Fig. 3 is a view of a schematic configuration of the heat transfer tube monitoring apparatus using pressure difference detection of the heat exchanger shown in Fig. 1.

Fig. 4 Fig. 4 is a view of a schematic configuration of another example of the heat transfer tube monitoring apparatus using pressure difference detection of the heat exchanger shown in Fig. 1.

Fig. 5 Fig. 5 is a view of a schematic configuration of the heat transfer tube monitoring apparatus using leak detection of the heat exchanger shown in Fig. 1.

Fig. 6 Fig. 6 is a view of a display example of a display shown in Figs. 3 and 4.

Fig. 7 Fig. 7 is a schematic of a heat transfer tube monitoring apparatus used in conventional thermal plants.

Description of Embodiments

Outline of Thermal Plant

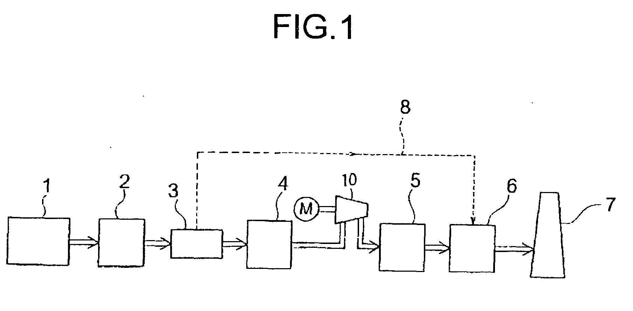

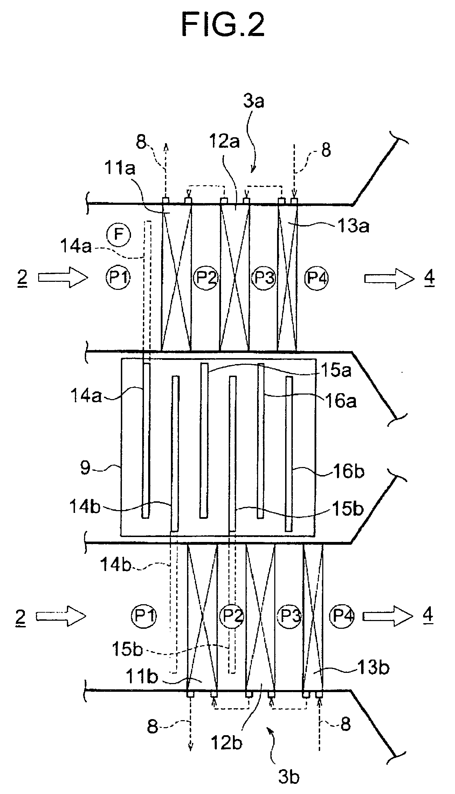

Referring first to Figs. 1 and 2, the whole configuration of a thermal plant to which a heat transfer tube monitoring apparatus according to an embodiment of the present invention is applied will be outlined.

Because coal or oil, for example, is used as fuel for a boiler 1, flue gas output from the boiler 1 contains nitrogen oxides ($NO_X$), sulfur oxides ($SO_X$), dust, and other air pollutants.

As illustrated in Fig. 1, flue gas output from the boiler 1 is guided to a denitrating apparatus 2 filled with catalysts.

In the denitrating apparatus 2, $NO_X$ contained in the flue gas is reduced to water and nitrogen and detoxified with ammonia ($NH_3$) injected as a reducing agent.

The temperature of high-temperature flue gas output from the denitrating apparatus 2 typically ranges from 120 to 150 degrees Celsius.

The high-temperature flue gas is guided into heat recovery units 3 (a first heat recovery unit 3a and a second heat recovery unit 3b) where the gas is subjected to heat exchange with a heat-transfer medium (made of water and a deoxidant (e.g., hydrazine)) to recover the heat of the gas.

The temperature of flue gas output from the heat recovery units 3a and 3b typically ranges from 80 to 110 degrees Celsius.

The heat-transfer medium heated in the heat recovery units 3a and 3b is delivered to a reheating apparatus 6, which will be described later, through a heat-transfer medium circulation pipe 8.

Between the two (the first and the second) heat recovery units 3a and 3b, a soot blowing apparatus 9 is provided as illustrated in Fig. 2.

Low-temperature flue gas output from the first heat recovery unit 3a and the second heat recovery unit 3b is merged and guided into an electrical precipitator 4 where dust contained in the low-temperature flue gas is reduced.

The dust-reduced flue gas is then guided into a desulfurizing apparatus 5 by an air blower (an ID fan) 10 driven by a motor.

In the desulfurizing apparatus 5, $SO_X$ contained in the flue gas is absorbed and reduced with limestone, and consequently, gypsum is produced as a by-product.

The temperature of flue gas output from the desulfurizing apparatus 5 is typically lowered to a range from 45 to 55 degrees Celsius.

This flue gas discharged to the atmosphere without any treatment is difficult to diffuse therein because of its low temperature, and may cause white smoke or other problems.

To address this, the flue gas is guided into the reheating apparatus 6 where the gas is heated up to equal to or more than a certain temperature with the heat-transfer medium delivered from the heat recovery units 3a and 3b through the heat-transfer medium circulation pipe 8. Subsequently, the gas is discharged through a stack 7.

While the configuration in Fig. 1 is an example of the boiler 1, the present invention is not limited thereto. Various types of flue gas sources, such as internal combustion engines, gas turbines, and incinerators are also applicable.

As the thermal plant, thermal power plants and waste and other incineration plants are applicable.

Heat Recovery Units

The heat recovery units 3a and 3b as heat exchangers will now be described in greater detail with reference to Fig. 2.

As illustrated in Fig. 2, in a flue gas duct between the denitrating apparatus 2 and the electrical precipitator 4, the two heat recovery units 3a and 3b each formed like a duct having a quadrangular cross section are provided in parallel to each other.

The flue gas output from the denitrating apparatus 2 illustrated in Fig. 1 is diverged and guided into the first heat recovery unit 3a and the second heat recovery unit 3b.

The first heat recovery unit 3a and the second heat recovery unit 3b include three-stage (multiple-stage) heat transfer tube bundles spaced apart from each other, i.e., high-temperature heat transfer tube bundles 11a and 11b, medium-temperature heat transfer tube bundles 12a and 12b, and low-temperature heat transfer tube bundles 13a and 13b, respectively, in the flow direction of flue gas.

Each of the heat transfer tube bundles 11a to 13b is made of a fin tube folded in multiple stages to be arranged in a plurality of rows.

Both ends of each fin tube are coupled to headers fixed to wall surfaces of the first heat recovery unit 3a and the second heat recovery unit 3b.

Each header is coupled to the heat-transfer medium circulation pipe 8.

A pressure detector P1 used for detecting the static pressure of flue gas is provided on the upstream of the high-temperature heat transfer tube bundles 11a and 11b above (on the ceilings or above side walls of) the first heat recovery unit 3a and the second heat recovery unit 3b, respectively.

Likewise, a second pressure detector P2 is provided between the high-temperature heat transfer tube bundles 11a and 11b and the medium-temperature heat transfer tube bundles 12a and 12b above the heat recovery units 3a and 3b, respectively.

Furthermore, a third pressure detector P3 is provided between the medium-temperature heat transfer tube bundles 12a and 12b and the low-temperature heat transfer tube bundles 13a and 13b above the heat recovery units 3a and 3b, respectively.

A fourth pressure detector P4 is provided on the downstream of the low-temperature heat transfer tube bundles 13a and 13b above the heat recovery units 3a and 3b, respectively.

Furthermore, a gas flow meter F used for detecting the amount of flue gas is provided on the upstream of the high-temperature heat transfer tube bundles 11a and 11b above the heat recovery units 3a and 3b, respectively.

The gas flow meter F is not limited to this example, and may be provided on the downstream of the low-temperature heat transfer tube bundles 13a and 13b instead.

Soot Blowing Apparatus

Between the two heat recovery units 3a and 3b, the soot blowing apparatus 9 including six soot blowers 14a, 14b, 15a, 15b, 16a, and 16b is provided.

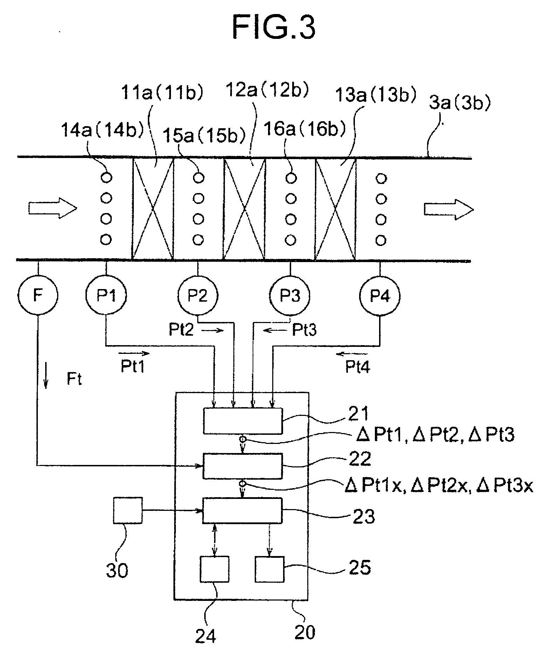

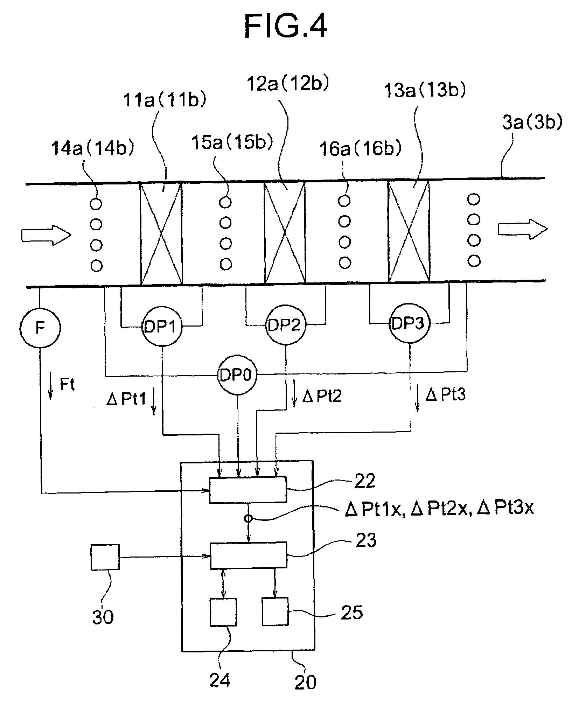

Each of the soot blowers 14a, 14b, 15a, 15b, 16a, and 16b is made of a soot blowing unit each having a plurality of cleansing liquid outlets (e.g., four cleansing liquid outlets) as illustrated in Figs. 3 and 4.

Out of the six blowers, a first set of three soot blowers 14a, 15a, and 16a is driven for soot blower operation by a driving apparatus (not shown) to penetrate a side wall of the heat recovery unit 3a, enter the heat recovery unit 3a, and blow out ash, scale, or the like deposited in the high-temperature heat transfer tube bundle 11a, the medium-temperature heat transfer tube bundle 12a, and the low-temperature heat transfer tube bundle 13a, which are on the downstream of the respective blowers.

Likewise, a second set of three soot blowers 14b, 15b, and 16b is driven for soot blower operation by a driving apparatus (not shown) to penetrate a side wall of the heat recovery unit 3b, enter the heat recovery unit 3b, and blow out ash, scale, or the like deposited in the high-temperature heat transfer tube bundle 11b, the medium-temperature heat transfer tube bundle 12b, and the low-temperature heat transfer tube bundle 13b, which are on the downstream of the respective blowers.

The high-temperature heat transfer tube bundle 11a, the medium-temperature heat transfer tube bundle 12a, and the low-temperature heat transfer tube bundle 13a of the first heat recovery unit 3a are arranged out of alignment in the flow direction of flue gas with the high-temperature heat transfer tube bundle 11b, the medium-temperature heat transfer tube bundle 12b, and the low-temperature heat transfer tube bundle 13b of the second heat recovery unit 3b. The first soot blowers 14a, 15a, and 16 and the second soot blowers 14b, 15b, and 16b are arranged in an alternating manner.

Heat Transfer Tube Monitoring Apparatus

A monitoring console 20 will now be described with reference to Fig. 3.

The following description is about the monitoring console 20 for the first heat recovery unit 3a.

The monitoring console 20 for the second heat recovery unit 3b has a similar calculator, storage, and the like to those described below.

The monitoring console 20 is in the form of a computer.

The calculator, storage, and the like described below are in the form of a computer program, a sequence block, or a memory to execute respective functions.

These examples are not limiting, and may be replaced with individual electric or electronic circuits.

The computer may be a stand-alone small-scale computer or a central computer that controls and monitors the thermal plant.

Differential Pressure Monitoring

As illustrated in Fig. 3, the pressure detectors P1 to P4 are used to measure pressures (Pt1 to Pt4) at the predetermined positions mentioned above in the first heat recovery unit 3a.

The measured pressures Pt1 to Pt4 are sent to a differential pressure calculator 21 included in the monitoring console 20.

The differential pressure calculator 21 calculates a differential pressure $\Delta Pt1$ before and after the high-temperature heat transfer tube bundle 11a, a differential pressure $\Delta Pt2$ before and after the medium-temperature heat transfer tube bundle 12a, and a differential pressure $\Delta Pt3$ before and after the low-temperature heat transfer tube bundle 13a by using the following formulas:

$$\Delta Pt1=Pt1-Pt2;$$

$$\Delta Pt2=Pt2-Pt3;$$

and

$$\Delta Pt3=Pt3-Pt4.$$

The differential pressures $\Delta Pt1$, $\Delta Pt2$, and $\Delta Pt3$ thus calculated are sent to a corrector 22 included in the monitoring console 20.

In the example illustrated in Fig. 3, a differential pressure detecting unit includes the pressure detectors P1 to P4 and the differential pressure calculator 21.

Alternatively, a differential pressure detector DP1 serving as a differential pressure detecting unit used for detecting a differential pressure between the upstream and the downstream of the high-temperature heat transfer tube bundles 11, a differential pressure detector DP2 serving as a differential pressure detecting unit used for detecting a differential pressure between the upstream and the downstream of the medium-temperature heat transfer tube bundles 12, and a differential pressure detector DP3 serving as a differential pressure detecting unit used for detecting a differential pressure between the upstream and the downstream of the low-temperature heat transfer tube bundles 13 may be provided as illustrated in Fig. 4, whereby the differential pressure detectors DP1 to DP3 directly measure the differential pressures $\Delta Pt1$, $\Delta Pt2$, and $\Delta Pt3$, respectively.

In this case, the differential pressures $\Delta Pt1$, $\Delta Pt2$, and $\Delta Pt3$ thus measured are sent directly to the corrector 22.

In addition, a differential pressure detector DP0 used for detecting a differential pressure between the upstream of the high-temperature heat transfer tube bundles 11 and the downstream of the low-temperature heat transfer tube bundles 13 may be provided.

The gas flow meter F is used to measure the amount of gas flowing in the first heat recovery unit 3a.

The amount of gas thus measured is sent as an operation state amount Ft to the corrector 22.

With the configuration including the air blower 10, power consumed by the motor driving the air blower 10 may be set as the operation state amount Ft.

Alternatively, the pitch angle of a fan included in the air blower may be set as the operation state amount Ft.

A differential pressure between the inlet and the outlet of the air blower 10 may be set as the operation state amount Ft.

In this case, the operation state amount Ft is sent to the corrector 22 from a control board, for example, of the motor driving the air blower 10.

A rated operation state amount Fo is set in advance with the corrector 22.

If the amount of gas is set as the operation state amount Ft, the amount of gas at the rated operation is set as the rated operation state amount Fo.

If power consumption is set as the operation state amount Ft, power consumed by the motor at the rated operation is set as the rated operation state amount Fo.

If the pitch angle is set as the operation state amount Ft, the pitch angle at the rated operation is set as the rated operation state amount Fo.

If a differential pressure between the inlet and the outlet of the air blower 10 is set as the operation state amount Ft, a differential pressure between the inlet and the outlet at the rated operation is set as the rated operation state amount Fo.

The rated operation state amount Fo may be obtained from a data controller 23, which will be described later.

Alternatively, a 100% load test may be conducted at a trial operation or an operational start of the thermal plant, and data measured in the test may be used as the rated operation state amount Fo.

The corrector 22 calculates corrected differential pressures $\Delta Pt1x$, $\Delta Pt2x$, and $\Delta Pt3x$ with the assumed flow of the rated flue gas amount based on the differential pressures $\Delta Pt1$, $\Delta Pt2$, and $\Delta Pt3$, the operation state amount Ft, and the rated operation state amount Fo by using the following formulas:

$$\Delta Pt1x=\Delta Pt1\times\alpha;$$

$$\Delta Pt2x=\Delta Pt2\times\alpha;$$

and

$$\Delta Pt3x=\Delta Pt3\times\alpha.$$

A conversion coefficient $\alpha$ for the rated operation means a conversion coefficient $\alpha$ for converting the differential pressures $\Delta Pt1$, $\Delta Pt2$, and $\Delta Pt3$ measured based on the operation state amount Ft into the corresponding pressures with the rated amount of gas supplied.

If the amount of gas is set as the operation state amount Ft, the conversion coefficient $\alpha$ is measured by: $\alpha=(Fo/Ft)^2$.

Specifically, with the high-temperature heat transfer tube bundles 11 in which scale or the like is deposited to some extent, if the amount of gas during measurement of the differential pressure $\Delta Pt1$ is set as the operation state amount Ft, the conversion coefficient $\alpha$ is used for multiplication to obtain a differential pressure when the rated amount of gas is supplied to the high-temperature heat transfer tube bundles 11.

The differential pressures $\Delta Pt1$, $\Delta Pt2$, and $\Delta Pt3$, the corrected differential pressures $\Delta Pt1x$, $\Delta Pt2x$, and $\Delta Pt3x$, and the operation state amount Ft are sent to the data controller 23 included in the monitoring console 20.

Leakage Monitoring

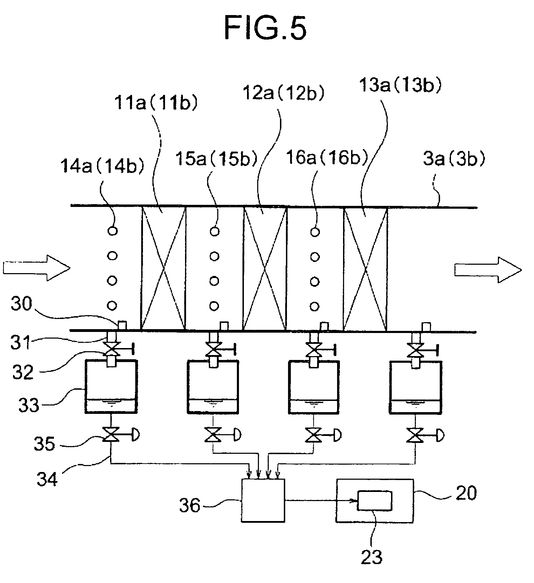

The heat recovery unit 3a also includes a leakage detecting apparatus illustrated in Fig. 5.

Referring to Fig. 5, baffles (effluent recovery plates) 30 are provided to the inner surface of the bottom plate of the heat recovery unit 3a on the upstream of the high-temperature heat transfer tube bundle 11a, on the upstream of the medium-temperature heat transfer tube bundle 12a, and on the upstream and the downstream of the low-temperature heat transfer tube bundle 13a.

Each of the baffles (effluent recovery plates) 30 is substantially L-shaped and its center is placed downstream to readily converge therein effluent.

An effluent recovery tube 31 is provided on the upstream of the center of each baffle 30, thereby recovering a heat-transfer medium that has leaked from the heat transfer tube bundle 11a, the medium-temperature heat transfer tube bundle 12a, and the low-temperature heat transfer tube bundle 13a.

A midpoint of each effluent recovery tube 31 has a stop valve 32.

The downstream end of each effluent recovery tube 31 is coupled to an effluent container 33 (effluent tank).

The lower part of each effluent container 33 is coupled to an effluent extraction tube (sampling tube) 34 for extracting effluent into an effluent component analyzer 36.

Each effluent extraction tube 34 has a remote control valve 35 interposed therein.

The effluent component analyzer 36 operates to open or close the remote control valves 35 sequentially on a periodic basis or based on measurement request signals sent from the monitoring console 20, and detects any one of: through which point (which effluent recovery tube 31) a deoxidant (e.g., hydrazine) is mixed, and the concentration of the deoxidant (e.g., hydrazine), or both.

The results (i.e., any one of: the presence of a deoxidant (e.g., hydrazine) detected for each effluent recovery tube 31, and the concentration of the deoxidant (e.g., hydrazine), or both) are sent to the data controller 23 included in the monitoring console 20.

One effluent component analyzer 36 may be provided for each effluent extraction tube 34.

Data Control

The data controller 23 receives various types of data from the corrector 22, as described above, i.e., the differential pressures $\Delta Pt1$, $\Delta Pt2$, and $\Delta Pt3$, the corrected differential pressures $\Delta Pt1x$, $\Delta Pt2x$, and $\Delta Pt3x$, and the operation state amount Ft.

The data controller 23 also receives, as described above, any one of: the presence of a deoxidant (e.g., hydrazine) detected for each effluent recovery tube 31, and the concentration of hydrazine, or both from the effluent component analyzer 36.

Furthermore, the data controller 23 receives event data IVTt indicating the measurement status of the various types of data (e.g., data measured at an operational start, shortly before soot blower operation, or shortly after soot blower operation; or data measured to be used as reference data) from an input apparatus (not shown) as required.

The event data IVTt that serves as reference data is preferably adopted from data measured in a 100% load test conducted at a trial operation or an operational start of the thermal plant.

In addition, year, month, and time data (measurement time t) indicating when measurement was conducted is obtained from a built-in clock in the computer.

The data controller 23 sends data groups each made up of the measurement time t, the event data IVTt, the differential pressures $\Delta Pt1$, $\Delta Pt2$, and $\Delta Pt3$, the corrected differential pressures $\Delta Pt1x$, $\Delta Pt2x$, and $\Delta Pt3x$, the operation state amount Ft, the rated operation state amount Fo, and any one of: the presence of hydrazine detected for each effluent recovery tube 31, and the concentration of hydrazine, or both to a storage 24 included in the monitoring console 20.

The storage 24 stores therein the data groups thus sent thereto in chronological order.

Display

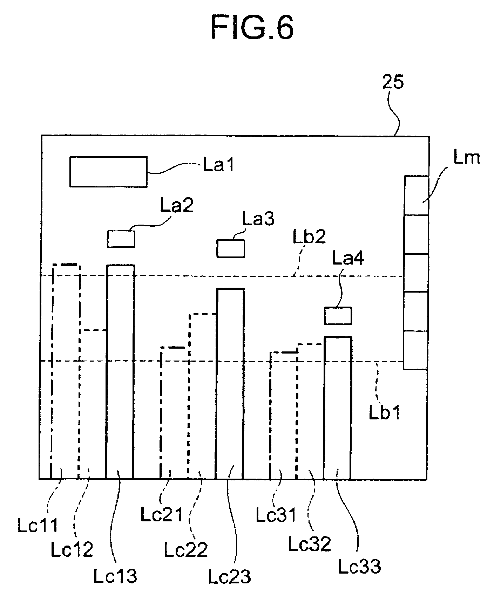

Referring next to Fig. 6, an example of display will now be described.

A display 25 reads out necessary data from the storage 24, converts the data into image data by a known method, and displays the resultant data thereon.

In the display example of images illustrated in Fig. 6, a plurality of images is displayed in an overlapping manner by a known method.

A text display image La1 on the upper left on the display 25 indicates the operation state amount Ft and the rated operation state amount Fo together with corresponding names and units.

If the amount of gas is adopted as the operation state amount Ft, the display indicates "Flue gas amount: 1000 m$^3$/h; Rated gas amount: 1200 km$^3$/h", for example.

Text display images La2, La3, and La4 placed above bar charts described later indicate the presence of a deoxidant (e.g., hydrazine) detected.

For example, the display indicates "Concentration of hydrazine leaked: 0 mmg", "Concentration of hydrazine leaked: 5 mmg" or "No hydrazine leaked", "Hydrazine leaked".

On the display 25, at least one line display image (two images Lb1 and Lb2 in the example illustrated in Fig. 6) is also displayed across the screen horizontally.

In the example illustrated in Fig. 6, the line display image Lb1 represents a reference (or default) line.

The line display image Lb2 represents a tolerance line of pressure drops for each bundle, and is displayed in a range of Lb1 multiplied by 1.2 to 1.4, for example.

On the display 25, nine measured differential pressure display images Lc11, Lc12, Lc13, Lc21, Lc22, Lc23, Lc31, Lc32, and Lc33 represented by bars extending upward and aligned horizontally are also displayed.

In this display example, the measured differential pressure display image Lc11 indicates the corrected differential pressure $\Delta Pt1x$ shortly before the latest soot blower operation, the measured differential pressure display image Lc12 indicates the corrected differential pressure $\Delta Pt1x$ shortly after the latest soot blower operation, and the measured differential pressure display image Lc13 indicates the current corrected differential pressure $\Delta Pt1x$.

The measured differential pressure display images Lc11, Lc12, and Lc13 are bar charts with the differential pressure $\Delta Pt1$ included in the data group stored as the "reference data" in the event data IVTt serving as the reference (or the default).

This example indicates that scale or ash has formed or been deposited incrementally as time passes in the high-temperature heat transfer tube bundles 11 despite soot blower operation.

The measured differential pressure display images Lc21, Lc22, and Lc23 represent an example of display at a predetermined time interval (e.g., every three months).

Specifically, the measured differential pressure display image Lc21 indicates the corrected differential pressure $\Delta Pt2x$ obtained six months ago, the measured differential pressure display image Lc22 indicates the corrected differential pressure $\Delta Pt2x$ obtained three months ago, and the measured differential pressure display image Lc23 indicates the current corrected differential pressure $\Delta Pt2x$.

This example indicates that scale or ash has formed or been deposited incrementally as time passes in the medium-temperature heat transfer tube bundle 12a.

The measured differential pressure display images Lc31, Lc32, and Lc33 represent an example of display at a predetermined time interval (e.g., every three months) like the measured differential pressure display images Lc21, Lc22, and Lc23.

Specifically, the measured differential pressure display image Lc31 indicates the corrected differential pressure $\Delta Pt3x$ obtained six months ago, the measured differential pressure display image Lc22 indicates the corrected differential pressure $\Delta Pt3x$ obtained three months ago, and the measured differential pressure display image Lc33 indicates the current corrected differential pressure $\Delta Pt3x$.

This example indicates that no scale or ash has formed or been deposited in the low-temperature heat transfer tube bundles 13.

Other Examples

While some embodiments according to the present invention are described above, it should be appreciated that the present invention is not limited to these embodiments, and various modifications can be made within the scope of the present invention.

For example, the example illustrated in Fig. 3 may be modified as follows: the data controller 23 sends data groups each made up of the measurement time t, the event data IVTt, the measured pressures Pt1 to Pt4 measured by the pressure detectors P1 to P4, respectively, the operation state amount Ft, the rated operation state amount Fo, and any one of: the presence of hydrazine detected for each effluent recovery tube 31, and the concentration of hydrazine, or both to the storage 24; the storage 24 stores therein the data groups; and in the display process, the differential pressure calculator 21 calculates the differential pressures $\Delta Pt1$, $\Delta Pt2$, and $\Delta Pt3$ or the corrector 22 calculates the corrected differential pressures $\Delta Pt1x$, $\Delta Pt2x$, and $\Delta Pt3x$, or both calculations are made, for necessary data groups only.

The display example of the display 25 is given by way of example. Alternatively, one-month interval, twelve lines (for a year) of the corrected differential pressure $\Delta Pt1x$ may be displayed on the display 25 only for the high-temperature heat transfer tube bundles 11 to indicate the state of scale forming therein, for example.

The differential pressure $\Delta Pt1$ before being corrected may be displayed.

Further, with various types of display images prepared, an image selection display image Lm with which an image to be displayed is selected may be displayed on the right edge of the display 25.

The storage 24 may store therein all of the various types of measured data, the calculated data, and the corrected data as described above, or instead store therein minimum data required for display.

References Signs List

| | |
|---|---|
| 1 | boiler |
| 2 | denitrating apparatus |
| 3, 3a, 3b | heat recovery unit |
| 4 | electrical precipitator |
| 5 | desulfurizing apparatus |
| 6 | reheating apparatus |
| 7 | stack |
| 8 | heat-transfer medium circulation pipe |
| 9 | soot blowing apparatus |
| 10 | air blower |
| 11a, 11b | high-temperature heat transfer tube bundle |
| 12a, 12b | medium-temperature heat transfer tube bundle |
| 13a, 13b | low-temperature heat transfer tube bundle |
| 14a, 14b, 15a, 15b, 16a, 16b | soot blower |
| 20 | monitoring console |
| 21 | differential pressure calculator |
| 22 | corrector |
| 23 | data controller |
| 24 | storage |
| 25 | display |
| 30 | baffle |
| 31 | effluent recovery tube |
| 32 | stop valve |
| 33 | effluent container |
| 34 | effluent extraction tube |
| 35 | remote control valve |
| 36 | effluent component analyzer |
| P1 to P4 | pressure detector |
| DP0 to DP3 | differential pressure detector |
| F | gas flow meter |
| Ft | operation state amount |
| Fo | rated operation state amount |
| Pt1 to Pt4 | measured pressure |

| ΔPt1 to ΔPt3 | differential pressure |
| ΔPt1x to ΔPt3x | corrected differential pressure |
| IVTt | event data |
| α | conversion coefficient |
| La1 to La4 | text display image |
| Lm | image selection display image |
| Lc11 to Lc13 | measured differential pressure display image |
| Lc21 to Lc23 | measured differential pressure display image |
| Lc31 to Lc33 | measured differential pressure display image |

## Claims

1. A heat transfer tube monitoring apparatus for use in a heat exchanger including multiple-stage heat transfer tube bundles (11a, 11b, 12a, 12b, 13a, 13b) spaced apart from each other in a flow direction of flue gas, the heat transfer tube monitoring apparatus comprising:

   a differential pressure detecting unit (P1, P2, P3, P4, 21) that is used for detecting a differential pressure between upstream and downstream for each of the heat transfer tube bundles (11a 11b, 12a, 12b, 13a, 13b).

2. The heat transfer tube monitoring apparatus according to claim 1, further comprising a heat-transfer medium detecting unit that is provided downstream of each of the heat transfer tube bundles (11a, 11b, 12a, 12b, 13a, 13b) and detects leakage of a heat-transfer medium flowing in the heat transfer tube bundles (11a, 11b, 12a, 12b, 13a, 13b).

3. The heat transfer tube monitoring apparatus according to claim 2, further comprising a display (25) that displays thereon the differential pressure for each of the heat transfer tube bundles (11a, 11b, 12a, 12b, 13a, 13b) detected by the differential pressure detecting unit (P1, P2, P3, P4, 21) and presence of leakage of the heat-transfer medium detected by the heat-transfer medium detecting unit.

## Patentansprüche

1. Wärmeübertragungsrohrüberwachungsvorrichtung für die Verwendung in einem Wärmetauscher mit mehrstufigen Wärmeübertragungsrohrbündeln (11a, 11b, 12a, 12b, 13a, 13b), die voneinander in einer Strömungsrichtung von Rauchgas beabstandet sind, wobei die Wärmeübertragungsrohrüberwachungsvorrichtung aufweist:

   eine Druckdifferenzerfassungseinheit (P1, P2, P3, P4, 21), die verwendet wird, um für jedes der Wärmeübertragungsrohrbündel (11a, 11b, 12a, 12b, 13a, 13b) eine Druckdifferenz zwischen stromaufwärts und stromabwärts zu erfassen.

2. Wärmeübertragungsrohrüberwachungsvorrichtung nach Anspruch 1, die ferner eine Wärmeübertragungsmedium-Erfassungseinheit aufweist, die strömungsabwärtig von jedem der Wärmeübertragungsrohrbündel (11a, 11b, 12a, 12b, 13a, 13b) bereitgestellt ist und ein Auslaufen des Wärmeübertragungsmediums, das in den Wärmeübertragungsrohrbündeln (11a, 11b, 12a, 12b, 13a, 13b) strömt, zu erfassen.

3. Wärmeübertragungsrohrüberwachungsvorrichtung nach Anspruch 2, das ferner eine Anzeige (25) aufweist, die die Druckdifferenz für jedes der Wärmeübertragungsrohrbündel (11a, 11b, 12a, 12b, 13a, 13b), die von der Druckdifferenzerfassungseinheit (P1, P2, P3, P4, 21) erfasst wird, und das Vorhandensein von Auslaufen des Wärmemediums, das von der Wärmeübertragungsmedium-Erfassungseinheit erfasst wird, darauf anzeigt.

## Revendications

1. Appareil de surveillance de tuyaux de transfert de chaleur à utiliser dans un échangeur de chaleur, comprenant des faisceaux de tuyaux de transfert de chaleur à étages multiples (11a, 11b, 12a, 12b, 13a, 13b) espacés les uns des autres dans une direction d'écoulement d'un gaz de fumée, l'appareil de surveillance de tuyaux de transfert de chaleur comprenant:

une unité de détection de pression différentielle (P1, P2, P3, P4, 21) qui est utilisée pour détecter une pression différentielle entre un point amont et un point aval pour chacun des faisceaux de tuyaux de transfert de chaleur (11a, 11b, 12a, 12b, 13a, 13b).

2. Appareil de surveillance de tuyaux de transfert de chaleur selon la revendication 1, comprenant en outre une unité de détection de fluide de transfert de chaleur qui est prévue en aval de chacun des faisceaux de tuyaux de transfert de chaleur (11a, 11b, 12a, 12b, 13a, 13b) et qui détecte toute fuite d'un fluide de transfert de chaleur qui s'écoule dans les faisceaux de tuyaux de transfert de chaleur (11a, 11b, 12a, 12b, 13a, 13b).

3. Appareil de surveillance de tuyaux de transfert de chaleur selon la revendication 2, comprenant en outre un écran d'affichage (25) qui affiche la pression différentielle pour chacun des faisceaux de tuyaux de transfert de chaleur (11a, 11b, 12a, 12b, 13a, 13b) détectée par l'unité de détection de pression différentielle (P1, P2, P3, P4, 21) et la présence d'une fuite du fluide de transfert de chaleur détectée par l'unité de détection de fluide de transfert de chaleur.

# FIG.1

# FIG.2

# FIG.3

# FIG.4

# FIG.5

# FIG.6

25

La1

Lm

La2

La3

Lb2

La4

Lb1

Lc11

Lc12

Lc13

Lc21

Lc22

Lc23

Lc31

Lc32

Lc33

# FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1114613 A
- JP H1114613 B
- JP 10274408 A